# EUROPEAN PATENT APPLICATION

(11) **EP 4 036 196 A1**
(43) Date of publication of application: **03.08.2022**
(21) Application number: 20868983.6
(22) Date of filing: 04.09.2020
(51) Int. Cl.: C10N 20/02, C10N 30/06, C10N 40/30, C10M 105/38, F25B 1/00, C09K 5/04

(54) **REFRIGERATION CYCLE DEVICE**

(30) Priority: 27.09.2019 JP 2019177588
(71) Applicant: Fujitsu General Limited, Kawasaki-shi, Kanagawa 213-8502 (JP)
(72) Inventor: KONDO, Masahiro, Kawasaki-shi, Kanagawa 213-8502 (JP); INABA, Mitsuki, Kawasaki-shi, Kanagawa 213-8502 (JP); TANAKA, Junya, Kawasaki-shi, Kanagawa 213-8502 (JP); HOSHINO, Shuhei, Kawasaki-shi, Kanagawa 213-8502 (JP)
(74) Representative: Daub, Thomas
(86) International application number: PCT/JP2020/033641
(87) International publication number: WO 2021/059930

(57) **Abstract**

A refrigeration cycle apparatus includes a refrigerant that is R466A, a compressor (5) that compresses the refrigerant, and a refrigeration machine oil that includes a base oil containing polyolester and that lubricates the compressor (5). A kinematic viscosity of the refrigeration machine oil at 40°C is 1.05 times or higher than and 1.50 times or lower than a kinematic viscosity of an other refrigeration machine oil at 40°C that includes a base oil containing polyolester, the other refrigeration machine oil appropriately lubricating the compressor (5) in an other refrigeration cycle apparatus including R410A as a refrigerant when the R410A is compressed by the compressor (5) .

## Description

### Field

The present disclosure relates to a refrigeration cycle apparatus.

### Background

Refrigeration cycle apparatuses installed in an air conditioner, a refrigerator, a water heater, and the like have been known. In the refrigeration cycle apparatus, refrigerant compressed by a compressor dissipates heat in a condenser, an expansion valve depressurizes the refrigerant, and the heat of the depressurized refrigerant is absorbed in an evaporator. There is a demand for changing the refrigerant used in a refrigeration cycle apparatus to a refrigerant with lower global warming potential (GWP). R466A, which is a candidate refrigerant alternative to R410A, is less toxic and non-flammable, and R466A has lower GWP (= 733) than R410A does (= 2088). In addition, R466A has high mutual solubility with refrigeration machine oil (polyolester (POE) oil) that includes a base oil containing POE. Such POE oil is also used in a refrigeration cycle apparatus that uses R410A, which is a refrigerant having been conventionally used. Refrigeration machine oil is injected into a refrigeration cycle apparatus to lubricate sliding parts of the compressor so as to prevent seizure of the sliding parts.

### Citation List

### Patent Literature

Patent Literature 1: International Publication No. 2012/157764

### Summary

### Technical Problem

The refrigeration machine oil inside the compressor may become less viscous under a high temperature condition, as a large amount of refrigerant dissolves into and dilutes the refrigeration machine oil. When the viscosity of the refrigeration machine oil is low, the refrigeration machine oil fails to lubricate the sliding parts of the compressor appropriately, disadvantageously, because an oil film for lubricating the sliding parts of the compressor is not maintained. Therefore, the refrigeration machine oil has appropriate viscosity so that the oil film for lubricating the sliding parts is maintained even under a high temperature condition. However, the refrigeration machine oil in which a refrigerant is dissolved becomes more viscous under a low temperature condition, for example. When the viscosity of the refrigeration machine oil is high, the friction between the sliding surfaces increases, and the sliding load is increased. Such an increase in the sliding load results in an increase in the power consumption (input) of a compressor.

The technique according to the present disclosure has been developed in consideration of these issues, and an object thereof is to provide a refrigeration cycle apparatus that lubricates sliding parts of a compressor appropriately.

### Solution to Problem

According to an aspect of an embodiment, a refrigeration cycle apparatus includes a refrigerant that is R466A, a compressor that compresses the refrigerant, and a refrigeration machine oil that includes a base oil containing polyolester and that lubricates the compressor, wherein a kinematic viscosity of the refrigeration machine oil at 40°C is 1.05 times or higher than and 1.50 times or lower than a kinematic viscosity of an other refrigeration machine oil at 40°C that includes a base oil containing polyolester, the other refrigeration machine oil appropriately lubricating the compressor in an other refrigeration cycle apparatus including R410A as a refrigerant when the R410A is compressed by the compressor. Advantageous Effects of Invention

The refrigeration cycle apparatus according to the present disclosure maintains an oil film for lubricating the sliding parts of the compressor, appropriately.

### Brief Description of Drawings

FIG. 1 is a refrigerant circuit diagram illustrating an air conditioner 1 in which a refrigeration cycle apparatus according to a first embodiment is installed.
FIG. 2 is a flowchart illustrating injection circuit control.
FIG. 3 is a graph indicating dissolved viscosities of a refrigeration machine oil in which R466A is dissolved and a refrigeration machine oil in which R410A is dissolved.
FIG. 4 is a graph illustrating temperatures and dissolved viscosities of the refrigeration machine oil when the refrigerant is compressed under a plurality of conditions.
FIG. 5 is a graph illustrating a relation between a viscosity grade of refrigeration machine oil and an increase in the compressor input under a plurality of conditions.

### Description of Embodiments

A refrigeration cycle apparatus according to an embodiment of the present disclosure will now be explained with reference to the drawings. The description below is not intended to limit the technique according to the present disclosure in any way. In the following descriptions, the same reference signs are given to the same components, and redundant explanations thereof will be omitted.

### [First Embodiment]

### [Refrigeration Cycle Apparatus]

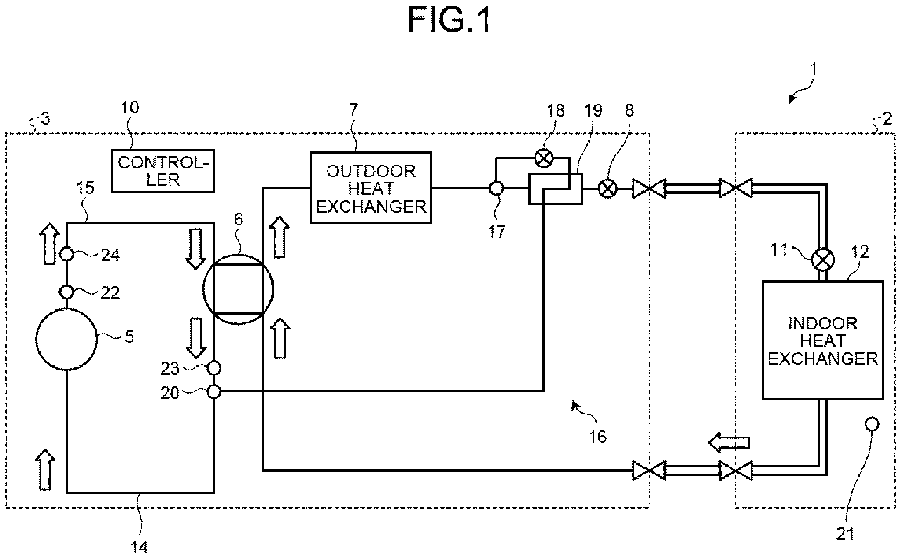

FIG. 1 is a refrigerant circuit diagram illustrating an air conditioner 1 in which a refrigeration cycle apparatus according to a first embodiment is installed.

The refrigeration cycle apparatus includes a refrigerant circuit where a plurality of elements are interconnected via refrigerant piping. This air conditioner 1 makes up a split system, and includes an indoor unit 2 and an outdoor unit 3. The indoor unit 2 is placed inside a room to be cooled and to be heated by the air conditioner 1. The outdoor unit 3 is placed outside the room. The outdoor unit 3 includes a compressor 5, a four-way valve 6, an outdoor heat exchanger 7, and an expansion valve 8 together forming a refrigerant circuit, and a controller 10. The indoor unit 2 includes an indoor heat exchanger 12 that is included in the refrigerant circuit.

The compressor 5 has a suction port, not illustrated, connected to a suction pipe 14, and a discharge port, not illustrated, connected to a discharge pipe 15, and includes a shaft, a motor unit, and a compressor unit that are not illustrated. By being controlled by the controller 10, the motor unit is caused to rotate the shaft. As the shaft is rotated, the compressor unit is caused to suction the refrigerant from the suction pipe 14, to compress the suctioned refrigerant, and to discharge the refrigerant to the discharge pipe 15. The four-way valve 6 is connected to the suction pipe 14 and the discharge pipe 15 of the compressor 5, and is connected to the outdoor heat exchanger 7 and the indoor heat exchanger 12 via the refrigerant piping. By being controlled by the controller 10, the four-way valve 6 is caused to switch the refrigerant circuit to one of a heating cycle and a cooling cycle. The four-way valve 6 switched to the cooling mode connects the discharge pipe 15 to the refrigerant piping that leads to the outdoor heat exchanger 7, and connects the refrigerant piping that leads to the indoor heat exchanger 12 to the suction pipe 14. The four-way valve 6 switched to the heating mode connects the discharge pipe 15 to the refrigerant piping that leads to the indoor heat exchanger 12, and connects the refrigerant piping that leads to the outdoor heat exchanger 7 to the suction pipe 14.

The outdoor heat exchanger 7 is connected to a refrigerant heat exchanger 19 via the refrigerant piping. The refrigerant heat exchanger 19 is connected to the expansion valve 8 via the refrigerant piping. The expansion valve 8 is connected to the indoor heat exchanger 12 via the refrigerant piping.

The air conditioner 1 also includes an injection circuit 16. The injection circuit 16 includes a branching unit 17, an injection expansion valve 18, the refrigerant heat exchanger 19, and a mixing unit 20. The branching unit 17 is a part of the refrigerant piping that is branched out from between the expansion valve 8 and the indoor heat exchanger 12, and is connected to the injection expansion valve 18. The injection expansion valve 18 is connected to the refrigerant heat exchanger 19. The injection expansion valve 18 is opened and closed, and has its opening adjusted, by being controlled by the controller 10. The refrigerant heat exchanger 19 is connected to the mixing unit 20. The refrigerant heat exchanger 19 carries out heat exchange between the refrigerant having passed through the injection expansion valve 18 and the refrigerant flowing through the refrigerant piping between the expansion valve 8 and the outdoor heat exchanger 7. The mixing unit 20 is connected to the middle of the suction pipe 14 in the compressor 5.

The air conditioner 1 also includes refrigerant and refrigeration machine oil. The refrigerant is R466A. R466A is a mixed refrigerant containing R32, R125, and R13I1 (trifluoroiodomethane CF₃I). R466A is less toxic and non-flammable, and R466A has lower GWP (= 733) than R410A (= 2088) .

The refrigeration machine oil contains a base oil and an additive. The base oil is made from polyolester (POE). The kinematic viscosity of the refrigeration machine oil according to this embodiment (hereinafter, simply referred to as a refrigeration machine oil) at 40°C is between 1.05 and 1.50 times the kinematic viscosity of refrigeration machine oil for R410A, which is another type of the refrigeration machine oil. The refrigeration machine oil for R410A is one used with R410A in the compressor 5, and can appropriately lubricate the sliding parts of the compressor 5 when R410A is compressed by the compressor 5. For example, the viscosity grade of the refrigeration machine oil contained in the refrigeration machine oil for R410A is VG68, where the viscosity grade of the refrigeration machine oil used in the air conditioner 1 is VG85 or higher and VG100 or lower. The viscosity grade is a grade of viscosity of refrigeration machine oil as defined by the International Organization for Standardization (ISO). An oil is more viscous when the viscosity grade is higher. A range of kinematic viscosity is defined for each number appended to the end of the viscosity grade, and this number represents a mean kinematic viscosity (mm²/s).

The refrigeration machine oil is stored inside the compressor 5, and lubricates the sliding parts of the compressor 5. The refrigeration machine oil is compatible with R466A. The compatibility between the refrigeration machine oil and R466A is higher than those between other refrigeration machine oils each and R410A. When compressing the refrigerant, the compressor 5 discharges the refrigeration machine oil with the refrigerant via the discharge pipe 15. Because the refrigeration machine oil is compatible with the refrigerant, the air conditioner 1 can easily return the refrigeration machine oil from a part of the refrigerant circuit excluding the compressor 5 to the compressor 5, even when the refrigeration machine oil is discharged with the refrigerant from the compressor 5. By returning the refrigeration machine oil to the compressor 5, the air conditioner 1 can prevent a drop in the amount of the refrigeration machine oil inside the compressor 5, so that the sliding parts of the compressor 5 can be lubricated appropriately.

The air conditioner 1 also includes a room temperature sensor 21, a discharge temperature sensor 22, a suctioned refrigerant pressure sensor 23, and a discharged refrigerant pressure sensor 24. The room temperature sensor 21 is installed in the indoor unit 2, and measures the room temperature of the room where the indoor unit 2 is located. The discharge temperature sensor 22 measures the temperature of the refrigerant flowing through the discharge pipe 15. The suctioned refrigerant pressure sensor 23 measures the pressure of the refrigerant flowing through the suction pipe 14. The discharged refrigerant pressure sensor 24 measures the pressure of the refrigerant flowing through the discharge pipe 15.

The controller 10 controls the four-way valve 6 to switch the refrigerant circuit to one of the heating cycle and the cooling cycle so as to perform the heating operation or the cooling operation set by a user. The controller 10 controls the compressor 5 so as to rotate the shaft at a rotational speed calculated based on the temperature difference between the room temperature measured by the room temperature sensor 21 and a set temperature (target room temperature) set by the user. The controller 10 controls the expansion valve 8 so as to bring the discharge temperature measured by the discharge temperature sensor 22 to a predetermined target temperature.

The controller 10 calculates a compression ratio based on a suction pressure measured by the suctioned refrigerant pressure sensor 23 and a discharge pressure measured by the discharged refrigerant pressure sensor 24. The compression ratio is equal to a value calculated by dividing the discharge pressure by the suction pressure. The controller 10 controls the injection expansion valve 18 based on the calculated compression ratio and the discharge temperature measured by the discharge temperature sensor 22.

### [Operations of Air Conditioner 1]

Operations of the air conditioner 1 include the heating and cooling operations, protective operation control, and injection circuit control.

The heating and cooling operations include a cooling operation and a heating operation. When the cooling operation is to be performed, the controller 10 switches the refrigerant circuit to the cooling cycle by controlling the four-way valve 6. The controller 10 also calculates a rotational speed based on the temperature difference between the set temperature set by the user and the room temperature measured by the room temperature sensor 21, and controls the compressor 5 to rotate the shaft at the calculated rotational speed. As the shaft is rotated, the compressor 5 compresses the low-pressure gas-phase refrigerant supplied via the suction pipe 14 into superheated, high-pressure gas-phase refrigerant, and discharges the refrigerant to the discharge pipe 15. The four-way valve 6 has been switched to the cooling mode, thereby supplying the high-pressure gas-phase refrigerant compressed by the compressor 5 from the discharge pipe 15 to the outdoor heat exchanger 7.

The outdoor heat exchanger 7 functions as a condenser during the cooling operation. In other words, the outdoor heat exchanger 7 carries out heat exchange between the high-pressure gas-phase refrigerant and the outside air to cause the high-pressure gas-phase refrigerant to dissipates heat while keeping the pressure of the high-pressure gas-phase refrigerant constant, to reduce the dryness of the high-pressure gas-phase refrigerant and to change the phase into a high-pressure liquid-phase refrigerant. The controller 10 adjusts the degree by which the expansion valve 8 is opened by controlling the expansion valve 8 so as to bring the discharge temperature measured by the discharge temperature sensor 22 to be equal to a predetermined target temperature. The expansion valve 8 allows the high-pressure liquid-phase refrigerant to expand, so that the high-pressure liquid-phase refrigerant is turned into a liquid-rich, low-pressure two-phase refrigerant.

The indoor heat exchanger 12 functions as an evaporator during the cooling operation. In other words, the indoor heat exchanger 12 cools the air inside the room by absorbing heat by carrying out heat exchange between the low-pressure two-phase refrigerant and the air inside the room, and turns the low-pressure two-phase refrigerant into a superheated low-pressure gas-phase refrigerant by increasing the dryness of the low-pressure two-phase refrigerant while keeping the pressure of refrigerant constant. The low-pressure gas-phase refrigerant is supplied to the suction pipe 14 of the compressor 5 via the four-way valve 6. In other words, during the cooling operation, the air conditioner 1 cools the room in which the indoor unit 2 is located by circulating the refrigerant through the refrigerant circuit of the refrigeration cycle apparatus.

During the heating operation, the controller 10 switches the refrigerant circuit to the heating cycle by controlling the four-way valve 6. The controller 10 also calculates a rotational speed based on the temperature difference between the set temperature set by the user and the room temperature measured by the room temperature sensor 21, and controls the compressor 5 to rotate the shaft at the calculated rotational speed. As the shaft is rotated, the compressor 5 compresses the low-pressure gas-phase refrigerant supplied via the suction pipe 14 into superheated, high-pressure gas-phase refrigerant, and discharges the refrigerant to the discharge pipe 15. The four-way valve 6 has been switched to the heating mode, thereby supplying the high-pressure gas-phase refrigerant compressed by the compressor 5 from the discharge pipe 15 to the indoor heat exchanger 12.

The indoor heat exchanger 12 functions as a condenser during the heating operation. In other words, the indoor heat exchanger 12 heats the air inside the room by carrying out heat exchange between the high-pressure gas-phase refrigerant and the indoor air, and changes the phase of the refrigerant to a high-pressure liquid-phase refrigerant by reducing the dryness of the high-pressure gas-phase refrigerant by allowing the high-pressure gas-phase refrigerant to dissipate heat while keeping the pressure constant. The controller 10 adjusts the degree by which the expansion valve 8 is opened by controlling the expansion valve 8 so as to bring the discharge temperature measured by the discharge temperature sensor 22 to be equal to a predetermined target temperature. The expansion valve 8 allows the high-pressure liquid-phase refrigerant to expand, so that liquid-rich low-pressure two-phase refrigerant is generated from the high-pressure liquid-phase refrigerant.

The outdoor heat exchanger 7 functions as an evaporator during the heating operation. In other words, the outdoor heat exchanger 7 absorbs heat by exchanging heat between the low-pressure two-phase refrigerant and the indoor air, thereby increasing the dryness of the low-pressure two-phase refrigerant while keeping the pressure constant, thus turning the refrigerant into a superheated low-pressure gas-phase refrigerant. The low-pressure gas-phase refrigerant is then supplied to the suction pipe 14 in the compressor 5, via the four-way valve 6. In other words, during the heating operation, the air conditioner 1 heats the room in which the indoor unit 2 is located by circulating the refrigerant through the refrigerant circuit of the refrigeration cycle apparatus.

When the air conditioner 1 is performing the heating operation or the cooling operation, the compressor 5 may compress the refrigerant with a standard load where the load is assumed to be around its rated load, an overload where the load is high, or a low load where the load is low. With the overload, the compressor 5 consumes more power in compressing the refrigerant, than that consumed with the rated load. With the low load, the compressor 5 consumes less power in compressing the refrigerant, than that consumed with the rated load.

### [Protective Operation Control]

The protective operation control is performed while the heating operation or the cooling operation is being performed. The controller 10 monitors the discharge temperature measured by the discharge temperature sensor 22 while the heating operation or the cooling operation is being performed. When the discharge temperature is higher than a predetermined first threshold temperature, the controller 10 controls the compressor 5 so as to perform a protective operation for stopping the rotation of the shaft of the compressor 5. By stopping the rotation of the shaft, the temperature in the compressor 5 is caused to drop. If the discharge temperature drops below a predetermined second threshold temperature while the protective operation is being performed, the controller 10 controls the compressor 5 to start rotating the shaft of the compressor 5 again. The second threshold temperature is a temperature lower than the first threshold temperature. By cooling the temperature inside the compressor 5, the air conditioner 1 can prevent the temperature inside the compressor 5 from becoming excessively high.

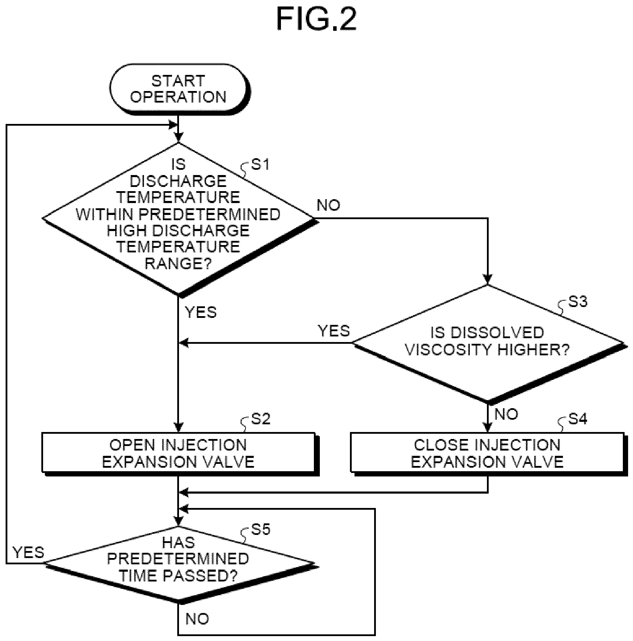

FIG. 2 is a flowchart illustrating injection circuit control. The injection circuit control is performed while the heating operation or the cooling operation is being performed. The controller 10 determines whether the discharge temperature measured by the discharge temperature sensor 22 is within a predetermined high discharge temperature range (Step S1). The high discharge temperature range is set lower than the first threshold temperature, for example, a range equal to or higher than 100°C and equal to or lower than 120°C. If the discharge temperature is within the high discharge temperature range (Yes at Step S1), the controller 10 causes the compressor 5 to suction the refrigerant flowing through the injection circuit 16 by controlling the injection circuit 16 (Step S2). In other words, the controller 10 controls the direction of the injection expansion valve 18 to open.

By controlling the direction of the injection expansion valve 18 to open, the low-pressure gas-phase refrigerant flowing through the suction pipe 14 is mixed with the refrigerant flowing through the injection circuit 16. In other words, when the injection expansion valve 18 is opened, part of the refrigerant, with a relatively low dryness, flowing between the expansion valve 8 and the indoor heat exchanger 12 in the refrigerant piping is supplied to the injection expansion valve 18 via the branching unit 17. The injection expansion valve 18 allows the part of the refrigerant to expand and to become depressurized, so that the part of the refrigerant is turned into a low-temperature two-phase refrigerant. The refrigerant heat exchanger 19 heats the low-temperature two-phase refrigerant by exchanging the heat between the low-temperature two-phase refrigerant having passed through the injection expansion valve 18 and the refrigerant flowing through the refrigerant piping between the expansion valve 8 and the outdoor heat exchanger 7. The refrigerant flowing through the injection circuit 16 is fed in the middle of the suction pipe 14 via the mixing unit 20, and is mixed with the low-pressure gas-phase refrigerant flowing through the suction pipe 14.

As the low-pressure gas-phase refrigerant is mixed with the refrigerant flowing through the injection circuit 16, the temperature of the low-pressure gas-phase refrigerant is reduced. As the temperature of the low-pressure gas-phase refrigerant is reduced, the discharge temperature is also reduced. By reducing the discharge temperature, the air conditioner 1 can prevent the discharge temperature from exceeding the first threshold temperature, and suppress triggering of the protective operation by the protective operation control. By suppressing triggering of the protective operation, the air conditioner 1 enables the heating operation or the cooling operation to be performed appropriately.

If the discharge temperature is not within the high discharge temperature range (No at Step S1), the controller 10 determines whether the dissolved viscosity of the refrigeration machine oil (the kinematic viscosity of the refrigeration machine oil containing the liquid phase refrigerant) inside the compressor 5 is higher than 4.0 mPa·s (Step S3). For example, the controller 10 calculates the compression ratio based on the suctioned refrigerant pressure measured by the suctioned refrigerant pressure sensor 23 and the discharged refrigerant pressure measured by the discharged refrigerant pressure sensor 24. The compression ratio is equal to a value calculated by dividing the discharged refrigerant pressure by the suction refrigerant pressure. The controller 10 determines whether the compression ratio is within a predetermined low compression ratio range, and whether the discharge temperature is within a predetermined low discharge temperature range. For example, the low compression ratio range is a range equal to or higher than 2 and equal to or lower than 2.5. The low discharge temperature range is set lower than the lower limit of the high discharge temperature range, for example, a range equal to or higher than 50°C and equal to or lower than 90°C. If the compression ratio is within the low compression ratio range and the discharge temperature is within the low discharge temperature range, the controller 10 determines that the dissolved viscosity of the refrigeration machine oil inside the compressor 5 is higher than 4.0 mPa·s. If the compression ratio is not within the low compression ratio range, or if the discharge temperature is not within the low discharge temperature range, the controller 10 determines that the dissolved viscosity of the refrigeration machine oil inside the compressor 5 is not higher than 4.0 mPa·s. The value 4.0 mPa·s used as the reference dissolved viscosity will be discussed later.

If it is determined that the dissolved viscosity of the refrigeration machine oil inside the compressor 5 is not higher than 4.0 mPa·s (No at Step S3), the controller 10 closes the injection expansion valve 18 by controlling the injection circuit 16 (Step S4). If it is determined that the dissolved viscosity of the refrigeration machine oil inside the compressor 5 is higher than 4.0 mPa·s (Yes Step S3), the controller 10 shifts the process to Step S2, and opens the injection expansion valve 18 by controlling the injection circuit 16 (Step S2). When the injection expansion valve 18 is opened, the low-pressure gas-phase refrigerant flowing through the suction pipe 14 is mixed with the refrigerant flowing through the injection circuit 16.

The dissolved viscosity of the refrigeration machine oil in which R466A is dissolved may become higher than 4.0 mPa·s when the compression ratio is within the low compression ratio range and the discharge temperature is within the low discharge temperature range. The refrigeration machine oil with a dissolved viscosity higher than 4.0 mPa·s is capable of maintaining an oil film on the sliding parts but increases the friction on the sliding surfaces, so that the load is increased. As a result, the power consumption (input amount) of the compressor 5 is increased. To address this issue, the injection expansion valve 18 is opened to mix the injection refrigerant with the low-pressure gas-phase refrigerant, so that the amount of R466A dissolved in a unit amount of the refrigeration machine oil inside the compressor 5 is increased. By increasing the amount of R466A dissolved in a unit amount of refrigeration machine oil, the dissolved viscosity of the refrigeration machine oil is reduced. Therefore, the air conditioner 1 can prevent the dissolved viscosity of the refrigeration machine oil from becoming higher than 4.0 mPa·s. The air conditioner 1 can suppress the increase in the power consumption of the compressor 5 by preventing the dissolved viscosity of the refrigeration machine oil from becoming higher than 4.0 mPa·s.

The controller 10 then determines whether a predetermined time has passed from when the timing at which the process at Step S2 or the process at Step S4 is performed (Step S5). If it is determined that the predetermined time has passed from when the timing at which the process at Step S2 or the process at Step S4 is performed (Yes at Step S5), the controller 10 performs the processes at Step S1 to Step S4 again. In other words, the air conditioner 1 repeats the processes at Step S1 to Step S4 at a predetermined time interval. The predetermined time is the time for phase change in the refrigeration cycle (e.g., 30 seconds), as a result of performing the control. Because the time for phase change in the refrigeration cycle as a result of performing the control becomes longer as the amount of the circulated refrigerant becomes less, the predetermined time is set based on the minimum amount of the circulated refrigerant.

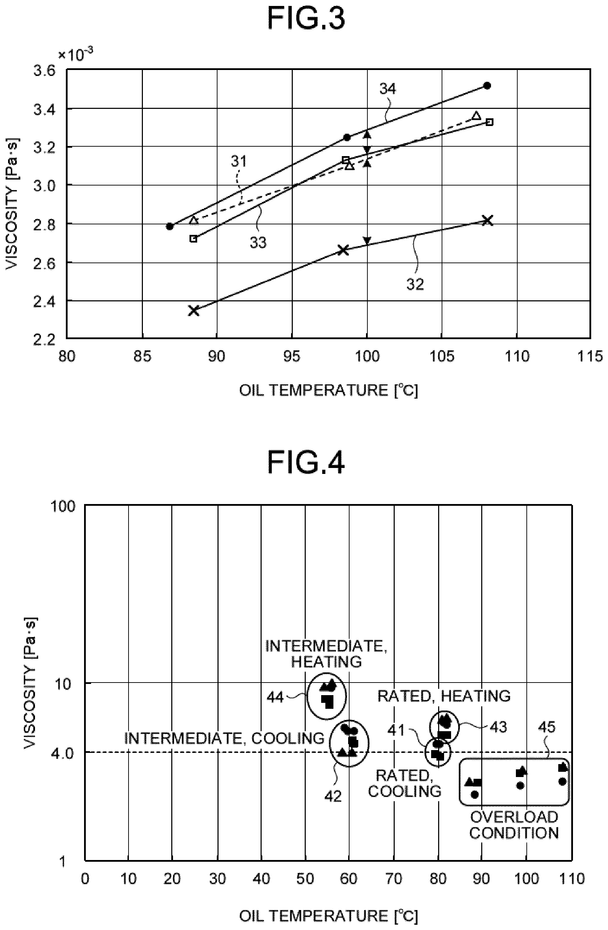

FIG. 3 is a graph indicating dissolved viscosities of the refrigeration machine oil in which R466A is dissolved and the refrigeration machine oil in which R410A is dissolved. FIG. 3 indicates three types of refrigeration machine oil, including VG68 refrigeration machine oil (refrigeration machine oil for R410A), VG85 refrigeration machine oil, and VG100 refrigeration machine oil. All of these refrigeration machine oils share the same base oil containing polyolester (POE), and are adjusted using an additive in such a manner that their respective kinematic viscosities are achieved. A line 31 indicates the dissolved viscosity of the refrigeration machine oil for R410A when R410A is dissolved in the refrigeration machine oil for R410A having the viscosity grade of VG68. The refrigeration machine oil for R410A is capable of lubricating the sliding parts of the compressor 5 appropriately when used with R410A in the compressor 5. A line 32 indicates the dissolved viscosity of VG68 refrigeration machine oil when R466A is dissolved in the VG68 refrigeration machine oil having the same viscosity grade as that of the refrigeration machine oil for R410A, which is VG68. The line 31 and the line 32 indicate that the dissolved viscosity of the VG68 refrigeration machine oil in which R466A is dissolved is lower than that of R410A refrigeration machine oil in which R410A is dissolved, in a temperature range around between 89°C and 102°C.

A line 33 indicates the dissolved viscosity of VG85 refrigeration machine oil when R466A is dissolved in the VG85 refrigeration machine oil having the viscosity grade of VG85. A line 34 indicates the dissolved viscosity of VG100 refrigeration machine oil when R466A is dissolved in the VG100 refrigeration machine oil having the viscosity grade of VG100. The line 31, the line 33, and the line 34 indicate that the dissolved viscosity of the VG85 refrigeration machine oil and the dissolved viscosity of the VG100 refrigeration machine oil are equivalent to that of the refrigeration machine oil for R410A, in the temperature range of approximately 89°C to 102°C. Therefore, the refrigeration machine oil with a viscosity of VG85 or higher and VG100 or lower can lubricate the sliding parts of the compressor 5 appropriately, and suppress an increase in the power consumption by the compressor 5, when used with R466A in the compressor 5.

The kinematic viscosity of a refrigeration machine oil with a viscosity grade of VG85 or higher and VG100 or lower is 1.05 times or higher and 1.50 times or lower than the kinematic viscosity of a refrigeration machine oil having a viscosity grade of VG68. In other words, the air conditioner 1 can lubricate the sliding parts of the compressor 5 appropriately, and reduce an increase in the power consumption of the compressor 5, by using R466A as a refrigerant, together with a refrigeration machine oil having a kinematic viscosity of 1.05 to 1.50 times the kinematic viscosity of the refrigeration machine oil for R410A.

FIG. 4 illustrates the temperatures and dissolved viscosities of the refrigeration machine oil resultant of compressing the refrigerant under a plurality of conditions. Points 41 indicate the temperature and the dissolved viscosity of the refrigeration machine oil with the refrigerant compressed by the compressor 5 during the cooling operation, with the rated load. The points 41 indicate that the dissolved viscosity of the refrigeration machine oil sometimes becomes higher than 4.0 mPa·s when the refrigerant is compressed by the compressor 5 in the rated-load cooling condition.

Points 42 indicate the temperature and the dissolved viscosity of the refrigeration machine oil when the refrigerant is compressed by the compressor 5 during the cooling operation with a low load. The points 42 indicate that the dissolved viscosity of the refrigeration machine oil sometimes becomes higher than 4.0 mPa·s when the refrigerant is compressed by the compressor 5 with the low load during the cooling operation. The points 41 and 42 indicate that the temperature of the refrigeration machine oil when the refrigerant is compressed by the compressor 5 with a low load is lower than that of the refrigeration machine oil when the refrigerant is compressed by the compressor 5 with the rated load, during the cooling operation.

Points 43 indicate the temperature and the dissolved viscosity of the refrigeration machine oil when the refrigerant is compressed by the compressor 5 during the heating operation with the rated load. The points 43 indicates that the dissolved viscosity of the refrigeration machine oil sometimes becomes higher than 4.0 mPa·s when the refrigerant is compressed by the compressor 5 during the heating operation with the rated load. Points 44 indicate the temperature and dissolved viscosity of the refrigeration machine oil when the refrigerant is compressed by the compressor 5 during the heating operation with a low load. The points 44 indicate that the dissolved viscosity of the refrigeration machine oil sometimes becomes higher than 4.0 mPa·s when the refrigerant is compressed by the compressor 5 during the heating operation with the low load.

The points 43 and 44 indicate that the temperature of the refrigeration machine oil when the refrigerant is compressed by the compressor 5 with a low load is lower than that of the refrigeration machine oil when the refrigerant is compressed by the compressor 5 with the rated load, during the heating operation. The points 41, 42, 43, and 44 indicate that the temperature of the refrigeration machine oil when the refrigerant is compressed by the compressor 5 with a low load is lower than that of the refrigeration machine oil when the refrigerant is compressed by the compressor 5 with the rated load, during the heating operation.

Points 45 indicate the temperature and the dissolved viscosity of the refrigeration machine oil when the refrigerant is compressed by the compressor 5 with an overload. The points 45 indicate that the dissolved viscosity of the refrigeration machine oil hardly becomes higher than 4.0 mPa·s when the refrigerant is compressed by the compressor 5 with the overload. The points 41, 43, and 45 indicate that the temperature of the refrigeration machine oil when the refrigerant is compressed by the compressor 5 with the overload is higher than that of the refrigeration machine oil when the refrigerant is compressed by the compressor 5 with the rated load. Furthermore, the points 41, 42, 43, 44, and 45 indicate that the dissolved viscosity of the refrigeration machine oil is higher when the temperature of the refrigeration machine oil is lower.

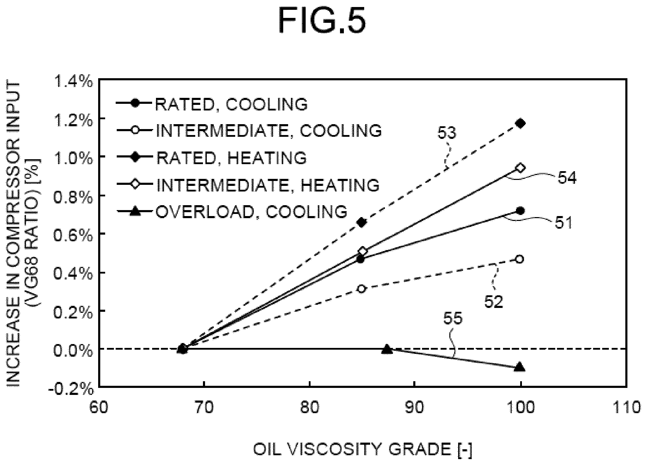

FIG. 5 is a graph illustrating a relation between a viscosity grade of the refrigeration machine oil and an increase in the amount of compressor input under a plurality of conditions. An increase in the compressor input is the ratio resultant of dividing the power consumption of the compressor 5 when the subject refrigeration machine oil is used under a certain condition, by the power consumption of the compressor 5 when a reference refrigeration machine oil having a viscosity grade of VG68 (the line 32 in FIG. 3) is used under that condition. A line 51 indicates a relation between the viscosity grade and an increase in the compressor input during the cooling operation with the rated load. The line 51 indicates that, during the cooling operation with the rated load, the compressor input increases more as the viscosity grade of the refrigeration machine oil is higher. In other words, the line 51 indicates that the power consumption of the compressor 5 increases as the viscosity of the refrigeration machine oil is higher, during the cooling operation with the rated load. A line 52 indicates a relation between the viscosity grade and an increase in the compressor input during the cooling operation with the low load. The line 52 indicates that, during the cooling operation with the low load, the compressor input increases more as the viscosity grade of the refrigeration machine oil is higher. In other words, the line 52 indicates that, during the cooling operation with the low load, the power consumption of the compressor 5 increases more as the viscosity grade of the refrigeration machine oil is higher.

A line 53 indicates a relation between the viscosity grade and an increase in the compressor input during the heating operation with the rated load. The line 53 indicates that, during the heating operation with the rated load, the compressor input increases more as the viscosity grade of the refrigeration machine oil is higher. In other words, the line 53 indicates that, during the heating operation with the rated load, the power consumption of the compressor 5 increases more as the viscosity of the refrigeration machine oil is higher. A line 54 indicates a relation between the viscosity grade and an increase in the compressor input during the heating operation with a low load. The line 54 indicates that, during the heating operation with the low load, the compressor input increases more as the viscosity grade of the refrigeration machine oil is higher. In other words, the line 54 indicates that, during the heating operation with the low load, the power consumption of the compressor 5 increases more as the viscosity of the refrigeration machine oil is higher.

A line 55 indicates a relation between the viscosity grade and an increase in the compressor input with the overload. The line 55 indicates that, with the overload, an increase in the compressor input does not change very much even when the viscosity grade of the refrigeration machine oil is changed. In other words, the line 55 indicates that, with the overload, the power consumption of the compressor 5 does not change very much even when the viscosity of the refrigeration machine oil is higher. Therefore, FIG. 5 indicates that the power consumption of the compressor 5 increases when the compressor 5 compresses the refrigerant with a highly viscous refrigeration machine oil under a rated load or a low load.

### [Effect of Refrigeration Cycle Apparatus according to First Embodiment]

The refrigeration cycle apparatus according to the first embodiment includes the compressor 5 that compresses R466A refrigerant, and the refrigeration machine oil that includes a base oil containing POE and that lubricates the compressor 5. The kinematic viscosity of this refrigeration machine oil at 40°C is 1.05 times or higher than and 1.5 times or lower than the kinematic viscosity of another refrigeration machine oil at 40°C, the other refrigeration machine oil appropriately lubricating the compressor 5 when the other refrigerant made from R410A is compressed by the compressor 5.

The POE is highly compatible with R466A. Therefore, it is easier for the refrigeration cycle apparatus to return the refrigeration machine oil having been sent out into the cycle with the refrigerant to the compressor 5, and to prevent seizure of the sliding parts of the compressor 5 due to the lack of lubricant stored in the compressor 5, appropriately. Furthermore, as a result of verification, it has been found out that the compatibility of POE and R466A was better than that between POE and R410A. Therefore, the dissolved viscosity of the refrigeration machine oil (using the POE as its base oil) used with R466A is lower than that of the refrigeration machine oil (using the POE as its base oil) used with R410A. The refrigeration cycle apparatus can ensure the dissolved viscosity of the refrigeration machine oil even when R466A is used as a refrigerant, because the kinematic viscosity of the refrigeration machine oil is higher than that of the other refrigeration machine oil used with R410A. By ensuring the dissolved viscosity of the refrigeration machine oil, the refrigeration cycle apparatus can maintain the oil film for lubricating the sliding parts, so that the sliding parts of the compressor 5 can be lubricated appropriately. Specifically, such a viscosity grade is VG85 or higher and VG100 or lower.

The refrigeration cycle apparatus according to the first embodiment further includes the outdoor heat exchanger 7, the indoor heat exchanger 12, the injection circuit 16, the sensors, and the controller 10. The outdoor heat exchanger 7 allows the high-pressure gas-phase refrigerant compressed by the compressor 5 to dissipate heat. Part of the refrigerant having its dryness reduced by the outdoor heat exchanger 7 is mixed with the low-pressure gas-phase refrigerant flowing through the suction pipe 14, via the injection circuit 16. These sensors measure physical quantities related to the dissolved viscosity of the refrigeration machine oil containing the dissolved refrigerant. If the dissolved viscosity is determined to be higher than 4.0 mPa·s according to the physical quantities, the controller 10 controls the injection expansion valve 18 so that the refrigerant flowing through the injection circuit 16 is mixed with the low-pressure gas-phase refrigerant flowing through the suction pipe 14. As the refrigerant flowing through the injection circuit 16 is mixed with the low-pressure gas-phase refrigerant flowing through the suction pipe 14, the concentration of the refrigerant dissolved in the refrigeration machine oil becomes higher, and the dissolved viscosity of the refrigeration machine oil becomes lower. As a result, the refrigeration cycle apparatus can prevent the dissolved viscosity of the refrigeration machine oil from becoming too high, and can suppress an increase in the power consumption of the compressor 5, and therefore, it is possible to suppress a deterioration in the efficiency of the compressor 5.

The refrigeration cycle apparatus according to the first embodiment also includes the discharge temperature sensor 22, the suctioned refrigerant pressure sensor 23, and the discharged refrigerant pressure sensor 24. The discharge temperature sensor 22 measures the discharge temperature of the high-pressure gas-phase refrigerant discharged from the compressor 5. The suctioned refrigerant pressure sensor 23 measures the pressure of the low-pressure gas-phase refrigerant to be suctioned into the compressor 5. The discharged refrigerant pressure sensor 24 measures the pressure of the high-pressure gas-phase refrigerant discharged from the compressor 5. The controller 10 controls the injection expansion valve 18 in such a manner that the refrigerant flowing through the injection circuit 16 is mixed with the refrigerant flowing through the suction pipe 14 when the compression ratio at which the refrigerant is compressed is within the predetermined low compression ratio range, and the discharge temperature is within the predetermined low discharge temperature range. With the refrigeration cycle apparatus, it is possible to prevent the dissolved viscosity of the refrigeration machine oil from becoming too high, and to suppress a deterioration in the efficiency of the compressor 5 resulting from the dissolved viscosity of the refrigeration machine oil becoming too high.

The controller 10 of the refrigeration cycle apparatus according to the first embodiment also controls the injection expansion valve 18 so that the refrigerant flowing through the injection circuit 16 is mixed with the refrigerant flowing through the suction pipe 14, when the discharge temperature is within the high discharge temperature range that is different from the low discharge temperature range. When the discharge temperature is higher than a predetermined threshold temperature, the refrigeration cycle apparatus may perform a protective operation to stop the operation of the compressor 5, and cool the inside of the compressor 5. When the discharge temperature is within the high discharge temperature range, the refrigeration cycle apparatus can prevent the discharge temperature from becoming higher than the threshold temperature by mixing the refrigerant flowing through the injection circuit 16 with the refrigerant flowing through the suction pipe 14, and suppress an execution of the protective operation. The refrigeration cycle apparatus can reduce the dissolved viscosity of the refrigeration machine oil by using the injection circuit 16 for preventing the discharge temperature from becoming too high. Therefore, it is possible to apply the present invention to a refrigeration cycle apparatus without adding any special elements, even for a purpose other than reducing the dissolved viscosity of the refrigeration machine oil, as long as the refrigeration cycle apparatus is provided with an injection circuit.

In the refrigeration cycle apparatus according to the first embodiment, the branching unit 17 is positioned upstream of the expansion valve 8, being upstream in the cooling operation, but the branching unit 17 may also be positioned upstream of the expansion valve 8, being upstream in the heating operation. The air conditioner 1 according to the first embodiment makes up a split system in which the indoor unit 2 and the outdoor unit 3 are connected in a one-to-one relation, but it is also possible to use a multi-split system in which a plurality of indoor units 2 are connected to one outdoor unit 3. Some of such multi-split air conditioners have refrigerant constantly flowing through the injection circuit, in order to reduce a pressure loss. With such a configuration, "CLOSE INJECTION EXPANSION VALVE 18" at Step S4 in the injection circuit control of FIG. 2 is replaced with "control in closing direction".

### [Second Embodiment]

In a refrigeration cycle apparatus according to a second embodiment, the mixing unit 20 in the refrigeration cycle apparatus according to the first embodiment is replaced with another mixing unit, but the other parts are the same as those in the refrigeration cycle apparatus according to the first embodiment. The mixing unit is connected to the compression chamber of the compressor 5. When the injection expansion valve 18 is opened, the refrigerant flowing through the injection circuit 16 is supplied to the compression chamber via the mixing unit 20, and is mixed with the low-pressure gas-phase refrigerant suctioned into the compression chamber.

In the same manner as the refrigeration cycle apparatus according to the first embodiment, the refrigeration cycle apparatus according to the second embodiment can lubricate the sliding parts of the compressor 5 appropriately, because the kinematic viscosity of the refrigeration machine oil is higher than that of the refrigeration machine oil for R410A. In the refrigeration cycle apparatus according to the second embodiment, by performing the injection circuit control to suppress an execution of the protective operation, it is possible to prevent the dissolved viscosity of the refrigeration machine oil from becoming too high, in the same manner as in the refrigeration cycle apparatus according to the first embodiment explained above.

In the refrigeration cycle in the embodiment explained above, the injection circuit control is executed based on the discharge temperature measured by the discharge temperature sensor 22, but the injection circuit control may also be executed based on another temperature that is different from the discharge temperature. An example of such a temperature is the temperature of a sealed container where the shaft, the motor unit, and the compressor unit in the compressor 5 are housed. Even when the injection circuit control is executed based on such a temperature, the refrigeration cycle can suppress an execution of the protective operation and prevent the dissolved viscosity of the refrigeration machine oil from becoming too high.

The controller 10 for the refrigeration cycle in the embodiment explained above calculates the compression ratio based on the pressure measured by the suctioned refrigerant pressure sensor 23 and the pressure measured by the discharged refrigerant pressure sensor 24, but the compression ratio may be calculated from other physical quantities. For example, the controller 10 may calculate the compression ratio based on the rotational speed of the shaft of the compressor 5. Even when the injection circuit control is executed based on the compression ratio calculated in the manner described above, the refrigeration cycle can suppress an execution of the protective operation and prevent the dissolved viscosity of the refrigeration machine oil from becoming too high.

### [Third Embodiment]

In a refrigeration cycle apparatus according to a third embodiment, the injection circuit 16 is omitted from the refrigeration cycle apparatus according to the first embodiment, but the other parts are the same as those in the refrigeration cycle apparatus according to the first embodiment. In the refrigeration cycle apparatus according to the third embodiment, the cooling and heating operations and the protective operation control are performed in the same manner as in the refrigeration cycle apparatus according to the first embodiment explained above. In the refrigeration cycle apparatus according to the third embodiment, although the injection circuit 16 is omitted, because the kinematic viscosity of the refrigeration machine oil is higher than that of the refrigeration machine oil for R410A, the sliding parts of the compressor 5 can be lubricated appropriately, and an increase in the power consumption of the compressor 5 can be suppressed, as in the refrigeration cycle apparatus according to the first embodiment.

The refrigeration cycle apparatus described above is installed in the split air conditioner 1, but may also be installed in a multi-split air conditioner. Even in a configuration in which the refrigeration cycle apparatus is installed in a multi-split air conditioner, because the kinematic viscosity of the base oil of the refrigeration machine oil is higher than that of the refrigeration machine oil for R410A, the sliding parts of the compressor 5 can be lubricated appropriately, and an increase in the power consumption of the compressor 5 can be suppressed.

Some embodiments have been explained above, but the descriptions above are not intended to limit the embodiments in any way. The above-mentioned components include those that can be easily thought of by those skilled in the art and those that are substantially the same, and those that are within the scope of what is called equivalent. Furthermore, the components explained above can be combined as appropriate. In addition, at least one of various omissions, substitutions, and modifications of the components can be made without departing from the essence of the embodiments.

### Reference Signs List

- 1: air conditioner
- 5: compressor
- 7: outdoor heat exchanger
- 8: expansion valve
- 10: controller
- 12: indoor heat exchanger
- 16: injection circuit
- 22: discharge temperature sensor
- 23: suctioned refrigerant pressure sensor
- 24: discharged refrigerant pressure sensor

## Claims

1. A refrigeration cycle apparatus comprising:
a refrigerant that is R466A;
a compressor that compresses the refrigerant; and
a refrigeration machine oil that includes a base oil containing polyolester (POE) and that lubricates the compressor, wherein
a kinematic viscosity of the refrigeration machine oil at 40°C is 1.05 times or higher than and 1.50 times or lower than a kinematic viscosity of an other refrigeration machine oil at 40°C that includes a base oil containing polyolester (POE), the other refrigeration machine oil appropriately lubricating the compressor in an other refrigeration cycle apparatus including R410A as a refrigerant when the R410A is compressed by the compressor.

2. The refrigeration cycle apparatus according to claim 1, wherein a viscosity grade of the refrigeration machine oil is VG85 or higher and VG100 or lower.

3. The refrigeration cycle apparatus according to claim 1, further comprising:
a condenser that allows discharged refrigerant having been compressed by the compressor to dissipate heat;
an injection circuit that mixes part of the refrigerant having dissipated the heat in the condenser with refrigerant suctioned into the compressor;
an injection expansion valve that is provided to the injection circuit and that is capable of opening and closing the injection circuit;
a sensor that measures a physical quantity related to a dissolved viscosity of the refrigeration machine oil when the refrigerant is dissolved in the refrigeration machine oil;
a controller configured to open the injection expansion valve so that part of heat-dissipating refrigerant having dissipated the heat in the condenser is mixed with the refrigerant suctioned into the compressor, when the dissolved viscosity is determined to be higher than 4.0 mPa·s according to the physical quantity.

4. The refrigeration cycle apparatus according to claim 3, wherein the sensor includes:
a temperature sensor that measures a discharge temperature of the discharged refrigerant discharged from the compressor; and
a sensor that measures a compression ratio at which the compressor compresses the refrigerant, wherein
the controller opens the injection expansion valve so that part of the heat-dissipated refrigerant having dissipated the heat in the condenser is mixed with the refrigerant suctioned into the compressor, when the compression ratio is within a predetermined low compression ratio range and the discharge temperature is within a predetermined low discharge temperature range.

5. The refrigeration cycle apparatus according to claim 4, wherein the controller further opens the injection expansion valve so that part of the heat-dissipating refrigerant having dissipated the heat in the condenser is mixed with the refrigerant suctioned into the compressor, when the discharge temperature is within a high discharge temperature range that is different from the low discharge temperature range.
